# EUROPÄISCHE PATENTSCHRIFT

(11) **EP 3 293 745 B1**
(45) Veröffentlichungstag und Bekanntmachung des Hinweises auf die Patenterteilung: **14.08.2019**
(21) Anmeldenummer: 16188414.3
(22) Anmeldetag: 12.09.2016
(51) Int. Cl.: H01G 9/042, H01G 11/24, H01G 11/38, H01G 11/42, H01M 4/133, H01M 4/62, H01M 10/0525, H01M 4/587

(54) **ADDITIV-MATERIAL FÜR EINE ELEKTRODE EINER ELEKTROCHEMISCHEN ZELLE, DOPPELSCHICHTKONDENSATOR UND HERSTELLUNGSVERFAHREN FÜR EINE ELEKTRODE DESSELBEN**
ADDITIVE MATERIAL FOR AN ELECTRODE OF AN ELECTROCHEMICAL CELL, DOUBLE LAYER CAPACITOR AND A METHOD FOR MANUFACTURING AN ELECTRODE OF THE SAME
MATERIAU ADDITIF POUR UNE ELECTRODE D'UNE CELLULE ELECTROCHIMIQUE, CONDENSATEUR A DOUBLE COUCHE ET PROCEDE DE PRODUCTION DE SON ELECTRODE

(43) Veröffentlichungstag der Anmeldung: 14.03.2018
(73) Patentinhaber: Heraeus Battery Technology GmbH, 63450 Hanau (DE)
(72) Erfinder: Weingarth, Daniel, 63110 Rodgau (DE); Michaud-Bernlochner, Julie, 53115 Bonn (DE); Hucke, Thomas, 63739 Aschaffenburg (DE); Samuelis, Dominik, 63486 Bruchköbel (DE)
(74) Vertreter: Staudt, Armin Walter

(56) Entgegenhaltungen:
- EP-A1- 2 755 262
- US-A1- 2005 287 421
- US-A1- 2009 196 816
- US-A1- 2016 060 125

## Beschreibung

### Technisches Gebiet

Die vorliegende Erfindung betrifft ein Additiv-Material für eine Elektrode einer elektrochemischen Zelle, das elektrisch leitfähige Partikel aus Kohlenstoff enthält.

Darüber hinaus betrifft die Erfindung einen elektrochemischen Doppelschichtkondensator bei dem zwei Elektroden in einem Abstand zueinander angeordnet, mit elektrischen Anschlüssen versehen, von einem Separator getrennt und von einem Elektrolyt benetzt sind, wobei mindestens eine der Elektroden einen mikroporösen Kohlenstoff, ein Aktivmaterial, ein Additiv-Material aus elektrisch leitfähigen Kohlenstoff-Additivpartikeln und einen Binder enthält.

Weiterhin betrifft die Erfindung ein Verfahren zur Herstellung einer Elektrode für einen elektrochemischen Doppelschichtkondensator, wobei Ausgangssubstanzen für ein Aktivmaterial, ein Additiv-Material und ein Binder zu einer Paste und dieser zu einer Schicht aus dem Elektrodenwerkstoff verarbeitet werden.

Darüber hinaus geht es in der Erfindung um spezifische Verwendungen des Additiv-Materials.

Eine elektrochemische Zelle in Sinne der Erfindung ist Bestandteil eines wiederaufladbaren Speichers für elektrische Energie auf elektrochemischer Basis. Bekannte Energiespeicher sind Akkumulatoren, beispielsweise Blei-Schwefel-, Nickel-Lithium-, Nickel-Cadmium, Lithium-Schwefel- oder Redox-Flow-Batterien (Flussbatterien), Brennstoffzellen und Kondensatoren. Kondensatoren speichern elektrische Energie nicht in chemischer Form, sondern in einem elektrischen Feld zwischen den Kondensatorplatten.

Eine besonders interessante Art von Energiespeicher-Kondensatoren sind elektrochemische Doppelschichtkondensatoren (Electric Double Layer Capacitors; EDLC), die als Energiespeicher beispielsweise in Elektrofahrzeugen und als Pufferkondensatoren für elektronische Schaltungen eingesetzt, und die auch als "Superkondensatoren" oder "Supercaps" bezeichnet werden. Der Energie-Speichermechanismus basiert auf einer potentialgesteuerten Ausbildung von Helmholtz-Doppelschichten mit hoher Ladungskapazität und Reversibilität an elektrisch leitfähigen Elektrodenoberflächen aus hochporösem Kohlenstoff in einem flüssigen Elektrolyt.

Beim Laden des Doppelschichtkondensators wandern elektrisch geladene Ionen im Elektrolyt zu den Elektroden des sogenannten Aktivmaterials der jeweils anderen Polarität. Dort bilden sie ein dünnes, nur wenige Moleküllagen dickes Dielektrikum. Die so entstehenden, sich gegenüberliegenden Schichten sind gegensätzlich geladen und durch einen elektrolytgetränkten Separator getrennt. Dies entspricht einer Serienschaltung von zwei Kondensatoren. Beim Entladen kehrt sich der lonentransport um und die bis dahin in den Poren der Elektroden eingeschlossenen Ionen verlassen den Elektrodenwerkstoff und gelangen wieder in den Elektrolyt. Der Elektrolyt dient somit als lonentransportmedium sowohl im Separator, der für die Ionen durchlässig ist, als auch innerhalb der Elektroden.

Doppelschichtkondensatoren zeichnen sich durch hohe Belastbarkeit und Langlebigkeit aus; sie verkraften bis zu 100.000 Ladezyklen. Sie zeigen aber im Vergleich zu Batterien eine geringe Energiedichte und einen sehr niedrigen Ersatzserienwiderstand (Equivalent Series Resistance; ESR).

### Stand der Technik

Die elektrochemische Leistung der Doppelschichtkondensatoren hängt maßgeblich vom Elektrodenmaterial ab. Die Elektroden bestehen in der Regel aus Kohlenstoff mit hoher Porosität und großer innerer Oberfläche. Der hochporöse Kohlenstoff stellt die zur Aufladung erforderliche Elektrodenoberfläche bereits und wird auch als "Aktivmaterial" bezeichnet. Gängige Aktivmaterialien sind Aktivkohle, Graphene, Karbid-abgeleitete Kohlenstoffe, Ruß, Kohlenstoff-Nanoröhrchen, Kohlenstoff-Zwiebeln und Mischungen daraus. Durch Zugabe eines Binders und eines Additivs können die elektrische Leitfähigkeit, die Belastbarkeit und die Gesamtleistung des Elektrodenwerkstoffs und des Doppelschichtkondensators insgesamt optimiert werden.

Einen Überblick über Additiv-Materialien für Elektroden von Doppelschichtkondensatoren gibt das Paper *"*Comparison of carbon onions and carbon blacks as conductive additives for carbon supercapacitors in organic electrolytes", von N. Jäckel, D. Weingarth, M. Zeiger, M. Aslan, I. Grobelsek, V. Presser; Jorurnal of Power Sources; Vol. 272 (25.12.2014); Seiten 1122-1133. Als Additiv-Materialien werden graphitische Nanomaterialien, wie etwa Kohlenstoff-Nanoröhrchen beschrieben und dabei insbesondere die Wirkungen sogenannter "Kohlenstoff-Zwiebeln" (carbon onions) auf die Energie-Performance untersucht. Kohlenstoff-Zwiebeln sind eine Abwandlung der sogenannten "Fullerene" - einer Kohlenstoff-Modifikation mit einer zu einer Kugel gebogenen Graphitschicht - bei der mehrere Kugelschalen mit unterschiedlichen Radien zwiebelförmig ineinander geschachtelt sind. Sowohl Kohlenstoff-Nanoröhrchen als auch Kohlenstoff-Zwiebeln sind nur unter hohem Aufwand herzustellen und daher vergleichsweise teuer.

Diesen Nachteil haben elektrisch gut leitfähige Kohlenstoffruße, sogenannte "Leitruße" (carbon black) nicht, die zu den am häufigsten verwendeten leitfähigen Additiven für das Elektrodenmaterial von Doppelschichtkondensatoren gehören (siehe auch D. Weingarth, D. Cericola, F.C.F Mornaghini, T. Hucke, R. Kötz, "Carbon additives for electrical double layer capacitor electrodes", Journal of Power Sources 266 (2014), 475-480). Die Leitruß-Partikel haben typischerweise Durchmesser im Bereich von 30 bis 50 nm und eine spezifische Oberfläche von weniger als 100 m²/g. Die Menge an diesem leitfähigen Additiv liegt je nach den spezifischen Anforderungen der Anwendung in Bezug auf Leistung und Energie-Performance bei etwa 5 Gew.-%.

Zur Herstellung der Doppelschichtkondensatoren werden in der Regel pulverförmige Ausgangssubstanzen für das Additiv- und für das Aktivmaterial zusammen mit einem Binder und einem Dispersionsmittel zu einer mehr oder weniger viskosen Paste verarbeitet und diese im feuchten Zustand auf Zieldicke gebracht und zu einer Schicht aus dem Elektrodenwerkstoff getrocknet (siehe auch D.M. Drobny, S. A. Tychyna, Y. A. Maletin, N. G. Stryzhakova, S. A. Zelinsky, "Methods for Manufacturing Carbon Electrodes for Supercapacitors: Pros and Cons", Proceedings of the International Conference Nanomaterials: Applications and Properties 2(4) (2013) 04NEA17). Die mit einem Stromanschluss versehene Schicht aus dem Elektrodenwerkstoff bildet die Elektrode oder einen Teil davon.

Die US 2016/0060125 A1 beschreibt ein Elektrodenmaterial für einen wiederaufladbaren Speicher für elektrische Energie; insbesondere für einen Lithiumionen-Kondensator. Das Elektrodenmaterial besteht aus Kohlenstoffpartikeln mit Kern-Hülle-Struktur, bevorzugt aus zwei unterschiedlichen Kohlenstoffarten. Bevorzugte Kohlenstoffart für den Kern ist synthetisches Grafitpulver. Auf den Kohlenstoff-Kern wird eine Hüllschicht vorzugsweise aus stickstoffhaltigem Polymer aufgebracht, das anschließend carbonisiert wird. Das so erzeugte Kohlenstoff-Kompositpulver zeichnet sich dadurch aus, dass es bereits 20 % seines ursprünglichen Gewichts verloren hat, wenn es auf eine Temperatur von 650 °C (oder weniger) erhitzt worden ist. Der mittlere Partikeldurchmesser (D₅₀-Wert) des Elektrodenmaterials liegt im Bereich von 1 bis 30 µm.

Die US 2009/0196816 A1 beschreibt ein Elektrodenmaterial für eine Lithiumionenbatterie. Auch dieses Elektrodenmaterial besteht aus Kohlenstoffpartikeln mit Kern-Hülle-Struktur, wobei der Kern aus natürlichem Grafit besteht und die Hülle aus turbostratischem Kohlenstoff. Zur Herstellung wird Grafitpulver mit Pechpulver trockengemischt und die Mischung erhitzt, so dass das Pech aufschmilzt und die "Mikroporen" des Grafits auffüllt und zu turbostratischem Kohlenstoff carbonisiert. Betrachtet wird das Volumenverhältnis V2/V1 von Makroporen (50-200 nm) und Mesoporen (2-50 nm), das mindestens 1 betragen soll. Das Grafitmaterial enthält vor der Beschichtung Makroporen mit einem Volumen V2 von mindestens 0,005 cm³/g. Der mittlere Durchmesser der Kohlenstoffpartikel liegt bei 5-30 µm.

Die US 2005/0287421 A1 beschreibt eine elektrochemische Zelle mit einer Aerogel-Kohlenstoff Kathode. Das Aerogel wird durch Pyrolyse eines Phenol-Aldehyd-Harzes erzeugt. Von seiner Gesamtporosität entfallen 70 bis 90 Vol.-% auf Makroporen und Mesoporen. Die spezifische Oberfläche der Poren mit einer Porengröße von mehr als 2 nm liegt im Bereich von 30 bis 100 m²/g. Das Elektrodenmaterial ist nicht aus Pulvern gepresst, sondern es bildet eine monolithische Struktur.

### Technische Aufgabenstellung

Ein wichtiges Qualitätskriterium von Doppelschichtkondensatoren ist die gravimetrische Energiedichte. Diese gibt an, wieviel Energie pro Masseneinheit gespeichert werden kann. Um die Energiedichte zu erhöhen, können die Elektroden dicker ausgestaltet werden, so dass der Anteil an Aktivmaterial bezogen auf das Gesamtgewicht der Zelle zunimmt. Daraus ergibt sich jedoch das Problem, dass die Ionen einen längeren Weg vom einen zum anderen Ende der Elektrode zurücklegen müssen, einhergehend mit einer Verlängerung der Ladedauer. Um dieses Problem zu lösen, muss die lonenleitfähigkeit im Elektrodenmaterial gesteigert werden.

Eine weitere Möglichkeit zu Erhöhung der Energiedichte besteht darin, das Elektrodenmaterial zu verdichten, beispielsweise durch Pressen. Durch eine Verdichtung nehmen die Lücken zwischen den Aktivmaterialpartikeln ab. Dies führt zwar zu einer höheren volumetrischen Energiedichte und zu einer höheren elektrischen Leitfähigkeit, gleichzeitig aber zu einer Abnahme der lonenleitfähigkeit.

Der Erfindung liegt die Aufgabe zugrunde, ein Additiv-Material für die Elektrode einer Zelle eines elektrochemischen Energiespeichers bereitzustellen, das eine hohe lonenleitfähigkeit im Vergleich zu Leitrußen oder Graphiten bewirkt.

Außerdem liegt der Erfindung die Aufgabe zugrunde, einen Doppelschichtkondensator anzugeben, der sich durch eine hohe Energiedichte im Vergleich zu einem Doppelschichtkondensator ohne Elektroden-Additiv bei gleichzeitig geringer Ladedauer auszeichnet.

Darüber hinaus liegt der Erfindung die Aufgabe zugrunde, für einen derartigen Doppelschichtkondensator ein kostengünstiges Herstellungsverfahren bereitzustellen.

### Allgemeine Beschreibung der Erfindung

Hinsichtlich des Additiv-Materials wird diese Aufgabe ausgehend von einem Additiv-Material der eingangs genannten Gattung erfindungsgemäß dadurch gelöst, dass die Kohlenstoff-Additivpartikel einen mittleren Partikeldurchmesser im Bereich von 1 bis 20 µm aufweisen und Mesoporen und Makroporen enthalten, die eine dreidimensional durchgängige Porenstruktur bilden, wobei Poren mit einem Porendurchmesser von 10 bis 1000 nm ein kumulatives Porenvolumen von mehr als 0,2 cm³/g ausmachen.

Im Gegensatz zu den aus dem Stand der Technik bekannten Kohlenstoff-Additivpartikeln für Doppelschichtkondensatoren, die lediglich der Erhöhung der elektrischen Leitfähigkeit des Elektrodenwerkstoffs dienen, trägt das Additiv-Material gemäß der Erfindung nicht nur zur elektrischen Leitfähigkeit bei, sondern auch zur Ionenleitung. Dadurch wird im Vergleich zu einem Doppelschichtkondensator ohne Additiv-Material eine Erhöhung der lonenleitfähigkeit bei gleichzeitig hoher elektrischer Leitfähigkeit bewirkt.

Eine erste Voraussetzung dafür ist eine durchgängige, offene Porosität der Kohlenstoff-Additivpartikel, die durch einen ausreichend hohen Anteil an Meso- und Makroporen gewährleistet wird. Ein durchgängiges, mit Elektrolyt befülltes Porennetzwerk im Elektrodenwerkstoff ist für die hohe lonenleitfähigkeit verantwortlich. Offene Porosität eines Materials zeigt sich darin, dass es saugfähig ist, was anhand eines Farbeindringtests oder mittels Quecksilberporosimetrie nachweisbar ist. Das Fehlen offener Poren wird bei einer Gesamtporosität von weniger als 10 % angenommen. Porengrößen - definiert als Abstand gegenüberliegender Porenwandungen - im Nanometerbereich werden im Allgemeinen in drei Kategorien unterteilt: Mikroporen (<2 nm), Mesoporen (2 - 50 nm) und Makroporen (> 50 nm). Beim erfindungsgemäßen Kohlenstoff-Additiv beträgt das Porenvolumen, das von Poren mit Porengrößen von 10 bis 1000 nm beruht mehr als 0,2 cm³/g.

Eine weitere Voraussetzung für die Erhöhung der lonenleitfähigkeit ist eine geeignete Partikelgröße der Kohlenstoff-Additivpartikel. Diese ist erfindungsgemäß durch einen engen Bereich für den mittleren Partikeldurchmesser zwischen 1 bis 20 µm definiert. Meso- und Makroporen enthaltende Kohlenstoff-Additivpartikel, die auf eine Partikelgröße von weniger als 1 µm zerkleinert sind, bestehen zum großen Teil aus Kohlenstoff-Wandungsmaterial, das ehemalige Meso- und Makroporen (vor dem Zerkleinern) umgeben hatte. Sie enthalten aber wenig miteinander über Porenkanäle verbundenes Porenvolumen, das zur Durch- und Weiterleitung von Ionen geeignet ist. Der Volumenanteil an Kohlenstoff-Additivpartikeln kann nur auf Kosten des Volumenanteils an Aktivmaterial und damit auf Kosten der Kapazität des Doppelschichtkondensators erhöht werden. Im Hinblick darauf sind Kohlenstoff-Additivpartikel mit mittleren Partikeldurchmessern von mehr als 20 µm ungünstig. Denn große Partikel nehmen ein großes Volumen bei vergleichsweise geringer Außenoberfläche ein. Dies erschwert die Ausbildung einer geschlossenen Phase aus miteinander in Kontakt stehenden Kohlenstoff-Additivpartikeln innerhalb des Elektrodenwerkstoffs im Vergleich zu feinteiligeren Kohlenstoff-Additivpartikeln bei gleichem Volumenanteil. Diese geschlossene Phase aus Kohlenstoff-Additivpartikeln wird im Folgenden auch als "Netzwerk" bezeichnet. Ein möglichst geschlossenes Netzwerk aus Kohlenstoff-Additivpartikeln ist im Sinne sowohl der Förderung der elektrischen als auch der Ionen-Leitfähigkeit erwünscht. Denn es trägt zu dem durchgängigen Porennetzwerk im Elektrodenwerkstoff bei, das Voraussetzung ist für die hohe lonenleitfähigkeit ist.

Bei einer bevorzugten Ausführungsform des erfindungsgemäßen Additiv-Materials weisen die Kohlenstoff-Additivpartikel eine spezifische BET-Oberfläche im Bereich von 10 bis 600 m²/g, und bevorzugt im Bereich von 10 bis 50 m²/g, im Bereich von 100 bis 200 m²/g, im Bereich von 60 bis 150 m²/g oder im Bereich von 400 bis 600 m²/g auf.

Je nach spezifischem Einsatzzweck des erfindungsgemäßen Additiv-Materials haben sich unterschiedliche große BET-Oberflächen als besonders geeignet erwiesen. So wird beispielsweise bei Lithium-Ionen-Sekundärbatterien eine BET-Oberfläche im Bereich von 10 bis 50 m²/g bevorzugt. Bei Doppelschichtkondensatoren lieg der bevorzugte Bereich für die BET-Oberfläche hingegen zwischen 10 und 200 m²/g und ganz besonders bevorzugt im Bereich von 60 bis 150 m²/g. Für Additiv-Material in Blei-Akkumulatoren wird hingegen eine tendenziell höhere spezifische Oberfläche im Bereich von 40 bis 600 m²/g bevorzugt.

Im Hinblick darauf wird das erfindungsgemäße Additiv-Material mit einer spezifischen BET-Oberfläche im Bereich von 400 bis 600 m²/g vorzugsweise als Additiv einer Elektrodenplatte in einem Schwefel-Blei-Akkumulator verwendet.

Und mit einer spezifischen BET-Oberfläche im Bereich von 60 bis 150 m²/g wird das erfindungsgemäße Additiv-Material bevorzugt als Additiv einer Elektrode einer Lithium-Ionen- Batterie verwendet.

Die Elektroden der elektrochemischen Speicherzelle, insbesondere des Doppelschichtkondensators bestehen beispielsweise aus Aktivkohle, dessen spezifische Oberfläche üblicherweise im Bereich von 1500-2200 m²/g liegt. Die spezifische Oberfläche von Leitrußen beträgt typischerweise mehr als 60 m²/g, wobei deren Einsatz zu einer Verringerung der Kapazität der Speicherzelle führt. Es wäre zu erwarten, dass auch bei Einsatz von Kohlenstoffadditiven im Sinne der vorliegenden Erfindung, die ebenfalls eine vergleichsweise geringe spezifische Oberfläche im Bereich von 10 bis 600 m²/g haben, die Kapazität sinkt. Dieser Effekt wurde aber nicht beobachtet. Im Gegenteil, der Einsatz des erfindungsgemäßen Kohlenstoff-Additivs mit einer BET-Oberfläche im Bereich zwischen 10 und 200 m²/g führte bei einem Doppelschichtkondensator zu einer Steigerung der Kapazität: Dieser Effekt spricht für eine verbesserte Materialausnutzung durch bessere Anbindung und Leitung des Aktivmaterials durch das Additiv.

In dem Zusammenhang hat es sich auch als besonders günstig erwiesen, wenn die Kohlenstoff-Additivpartikel eine Mikroporosität von weniger als 20 % aufweisen - bezogen auf ein Porenvolumen mit Porengrößen bis maximal 1000 nm.

Der Anteil der durch Mikroporen mit einem Durchmesser von weniger als 2 nm generierten Oberfläche an der Gesamtoberfläche ist möglichst gering. Denn Mikroporen sind zu klein für die die Aktivmaterial-Ionen transportierenden Elektrolyt-moleküle und bilden quasi unbrauchbaren Leerraum, der sich auf die volumetrische und gravimetrische Energiedichte des Doppelschichtkondensators ungünstig auswirkt.

Die für das Erreichen eines geschlossenen Kohlenstoff-Netzwerks aus dem Additiv-Material notwendigen Gehalte können mit deutlichen Eigenschaftsverschlechterungen, wie einem Abfall der Kapazität. der mechanischen Festigkeit oder verschlechterter Verarbeitbarkeit verbunden sein. Daher ist der Anteil an Additiv-Material grundsätzlich so gering wie möglich aber so groß wie nötig. Insbesondere im Hinblick auf ein möglichst geschlossenes Netzwerk aus Kohlenstoff-Additivpartikeln bei gleichzeitig möglichst geringem Volumenanteil an Additivmaterial hat es sich bewährt, wenn die Kohlenstoff-Additivpartikel einen mittleren Partikeldurchmesser von weniger als 15 µm, vorzugsweise von weniger als 10 µm und - insbesondere bei Lithium-Ionen-Speicherzellen - einen Partikeldurchmesser von weniger als 5 µm, aufweisen.

Bei einer besonders bevorzugten Ausführungsform des erfindungsgemäßen Additiv-Materials weisen die Kohlenstoff-Additivpartikel eine Gesamtporosität im Bereich von 60 bis 85 % auf, wobei die Porosität der Kohlenstoff-Additivpartikel durch eine mittlere Porenweite im Bereich von 250 bis 700 nm, und für Poren mit einem Porendurchmesser von 10 bis 1000 nm das kumulative Porenvolumen bevorzugt im Bereich von 0,5 bis 2,3 cm³/g liegt und besonders bevorzugt Poren aus diesem Porengrößenbereich ein kumulatives Porenvolumen von mindestens 1 cm³/g ausmachen.

Das Gesamtporenvolumen der porösen Kohlenstoffpartikel ist dabei makroporendominiert. Ein Netzwerk miteinander verbundener Makroporen ist für die Ionenleitung besonders vorteilhaft.

Hinsichtlich des Doppelschichtkondensators wird die oben angegeben Aufgabe ausgehend von einem Doppelschichtkondensator der eingangs genannten Gattung erfindungsgemäß dadurch gelöst, dass das Additiv-Material elektrisch leitfähige Partikel aus Kohlenstoff enthält, die einen mittleren Partikeldurchmesser im Bereich von 1 bis 20 µm aufweisen und Mesoporen und Makroporen enthalten, die eine dreidimensional durchgängige Porenstruktur bilden, wobei Poren mit einem Porendurchmesser von 10 bis 1000 nm ein kumulatives Porenvolumen von mehr als 0,2 cm³/g ausmachen.

Der erfindungsgemäße Doppelschichtkondensator enthält mindestens zwei beabstandet voneinander angeordnete Elektroden, die in einen Elektrolyt eintauchen oder die von diesem zumindest benetzt sind. Die Elektroden sind mit elektrischen Anschlüssen für die Stromableitung und Stromzuleitung verbunden, und zwischen ihnen ist ein Separator angeordnet, der für Aktivmaterial-Ionen in dem Elektrolyt durchlässig ist. Mindestens eine der Elektroden besteht aus einen mikroporösen Kohlenstoff, wie beispielsweise aus Aktivkohle, der das Gerüst des Elektrodenwerkstoffs bildet und in dem darüber hinaus das Aktivmaterial, ein Additiv-Material aus elektrisch leitfähigen Kohlenstoff-Additivpartikeln und ein Binder, beispielsweise aus einem polymeren Kunststoff, enthalten sind.

Das Energiespeicherprinzip des Doppelschichtkondensators beruht auf Ladungsspeicherung in den Doppelschichten der Elektroden oder (ergänzend dazu) auf chemischer Reaktionsenergie basierend auf Redoxreaktionen von Aktivmaterial bei sogenannten "Pseudo-Kondensatoren". Durch Zulassen von Redoxprozessen kann die Energieeffizienz erhöht werden.

Im Gegensatz zu den aus dem Stand der Technik bekannten Doppelschichtkondensatoren mit Kohlenstoff-Additivpartikel in Form von elektrisch leitfähigem Leitruß oder aus Graphit, der lediglich die elektrische Leitfähigkeit des Elektrodenwerkstoffs erhöht, enthält mindestens eine Elektrode des erfindungsgemäßen Doppelschichtkondensators ein Additiv-Material aus porösem Kohlenstoff, der zusätzlich zur lonenleitung beiträgt. Dadurch wird im Vergleich zu anderen Additiv-Materialen und im Vergleich zu einem Elektrodenwerkstoff ohne Additiv-Material eine Erhöhung der lonenleitfähigkeit bei gleichzeitiger Beibehaltung einer hohen elektrischer Leitfähigkeit erreicht.

Das oben erläuterte, erfindungsgemäße Additiv-Material ist für diesen Zweck besonders geeignet. Die obigen Erläuterungen zum erfindungsgemäßen Additiv-Material gelten daher auch für den Doppelschichtkondensator gemäß der Erfindung.

Das Additiv-Material enthält elektrisch leitfähige Partikel aus Kohlenstoff, die einen mittleren Partikeldurchmesser im Bereich von 1 bis 20 µm aufweisen. Das Porenvolumen wird überwiegend von Mesoporen und Makroporen dominiert, die eine dreidimensional durchgängige Porenstruktur bilden. Dabei machen Poren mit Porengrößen von 10 bis 1000 nm ein kumulatives Porenvolumen von mehr als 0,2 cm³/g aus, besonders bevorzugt ein kumulatives Porenvolumen im Bereich von 0,5 bis 2,3 cm³/g und ganz besonders bevorzugt ein kumulatives Porenvolumen von mindestens 1 cm³/g.

Eine erste Voraussetzung für eine im Vergleich zu einem Elektrodenwerkstoff ohne Additiv-Material höhere Ionen-Leitfähigkeit ist eine durchgängige, offene Porosität der Kohlenstoff-Additivpartikel, die durch einen ausreichend hohen Anteil an Meso- und Makroporen gewährleistet wird. Ein durchgängiges, offenes Porennetzwerk im Elektrodenwerkstoff ist für die hohe lonenleitfähigkeit verantwortlich.

Eine weitere Voraussetzung für die Erhöhung der lonenleitfähigkeit ist eine geeignete Partikelgröße der Kohlenstoff-Additivpartikel. Diese ist erfindungsgemäß durch einen engen Bereich für den mittleren Partikeldurchmesser zwischen 1 bis 20 µm definiert. Meso- und Makroporen enthaltende Kohlenstoff-Additivpartikel, die auf eine Partikelgröße von weniger als 1 µm zerkleinert sind, bestehen zum großen Teil nur noch aus Kohlenstoff-Wandungsmaterial, welches vor dem Zerkleinern vorhandene ehemalige Meso- und Makroporen umgeben hatte. Sie enthalten aber wenig miteinander über Porenkanäle verbundenes Porenvolumen, das zur Durch- und Weiterleitung von Ionen benötigt wird. Der Volumenanteil an Koh-lenstoff-Additivpartikeln kann nur auf Kosten des Volumenanteils an Aktivmaterial und damit auf Kosten der Kapazität des Doppelschichtkondensators erhöht werden. Im Hinblick darauf sind Kohlenstoff-Additivpartikel mit mittleren Partikeldurchmessern von mehr als 20 µm ungünstig. Denn große Partikel nehmen ein großes Volumen bei vergleichsweise geringer Außenoberfläche ein. Dies erschwert die Ausbildung einer geschlossenen Phase aus miteinander in Kontakt stehenden Kohlenstoff-Additivpartikeln innerhalb des Elektrodenwerkstoffs im Vergleich zu feinteiligeren Kohlenstoff-Additivpartikeln bei gleichem Volumenanteil. Diese geschlossene Phase aus Kohlenstoff-Additivpartikeln wird im Folgenden auch als "Netzwerk" bezeichnet. Ein möglichst geschlossenes Netzwerk aus Kohlenstoff-Additivpartikeln ist im Sinne sowohl der Förderung der elektrischen als auch der Ionen-Leitfähigkeit erwünscht. Denn es trägt zu dem durchgängigen Porennetzwerk im Elektrodenwerkstoff bei, das Voraussetzung ist für die hohe Ionenleitfähigkeit ist.

Es hat sich gezeigt, dass eine homogene Verteilung und ein möglichst geschlossenes Netzwerk aus Kohlenstoff-Additivpartikeln bei gleichzeitig möglichst geringem Volumenanteil derselben erreichbar ist, wenn die mittlere Partikelgröße der Kohlenstoff-Additivpartikel merklich kleiner ist als die der Aktivmaterial-Teilchen. Im Hinblick darauf wird das Aktivmaterial vorzugsweise aus Primärpartikeln gebildet, die einen mittleren Primärpartikel-Durchmesser aufweisen, der mindestens um den Faktor 3 größer ist als der mittlere Partikeldurchmesser der Kohlenstoff-Additivpartikel, wobei der mittlere Primärpartikel-Durchmesser der Aktivmaterial-Partikel im Bereich von 20 bis 30 µm und der mittlere Partikeldurchmesser der Kohlenstoff-Additivpartikel im Bereich von 7 bis 10 µm liegen.

Die Partikeldurchmesser-Mittelwerte entsprechen dabei jeweils dem oben definierten D50-Wert.

Um den Anteil an Aktivmaterial im Elektrodenwerkstoff möglichst hoch zu halten, ist der Anteil der Kohlenstoff-Additivpartikel vorzugsweise auf den Bereich von 4 bis 7 Gew.-% beschränkt.

Diese Gewichtsangabe bezieht sich auf das finale Gesamtgewicht des Elektrodenmaterials nach Durchführung einer etwaigen mit Gewichtsverlust einhergehenden Behandlung, wie etwa dem Trocknen des Elektrodenwerkstoffs.

Bei einer besonders bevorzugten Ausführungsform des erfindungsgemäßen Doppelschichtkondensators hat die Elektrode eine Elektrodenschicht mit einer Dicke von mindestens 100 µm, vorzugsweise von mindestens 150 µm.

Diese Dickenangabe bezieht sich auf eine trockene und verdichtete, einseitig an einem Träger ausgebildete Schicht, ohne Berücksichtigung des Trägers selbst. Bei doppelseitiger Ausführung beträgt die Gesamtdicke der beiden Elektrodenschicht somit bevorzugt mindestens 100 µm, besonders bevorzugt mindestens 300 µm. Dabei handelt es ich um eine vergleichsweise große Dicke der Elektrodenschicht; Standard-Dicken von Elektrodenschichten bei industriell gefertigten Doppelschichtkondensatoren liegen bei 60 bis 90 µm. Die vergleichsweise dicke Elektrodenschicht ermöglicht es, einen Doppelschichtkondensator mit besonders hoher gravimetrischer und volumetrischer Energiedichte bereitzustellen. Der längere Diffusionsweg vom einen zum anderen Ende der Elektrode wird durch die hohe lonenleitfähigkeit des erfindungsgemäßen Additiv-Materials und damit einhergehend der hohen lonenleitfähigkeit des Elektrodenmaterials beim erfindungsgemäßen Doppelschichtkondensator kompensiert. Die durch die hohe Ionenleitfähigkeit bessere Balancierung und elektrochemische Homogenität in der Elektrode kann mit einer Verlängerung der Lebensdauer einhergehen.

Hinsichtlich des Herstellungsverfahrens für eine Elektrode eines Doppelschichtkondensators wird die oben angegeben Aufgabe ausgehend von einem Verfahren der eingangs genannten Gattung erfindungsgemäß dadurch gelöst, dass als Additiv-Material elektrisch leitfähige Partikel aus Kohlenstoff eingesetzt werden, die einen mittleren Partikeldurchmesser im Bereich von 1 bis 20 µm aufweisen und Mesoporen und Makroporen enthalten, die eine dreidimensional durchgängige Porenstruktur bilden, wobei Poren mit einem Porendurchmesser von 10 bis 1000 nm ein kumulatives Porenvolumen von mehr als 0,2 cm³/g ausmachen.

Die dreidimensional durchgängige Porenstruktur der Kohlenstoff-Additivpartikel wird vorzugsweise dadurch erreicht, indem sie eine Gesamtporosität im Bereich von 60 bis 85 % und eine mittlere Porenweite im Bereich von 250 bis 700 nm aufweisen, wobei für Poren mit einem Porendurchmesser von 10 bis 1000 nm das kumulative Porenvolumen bevorzugt im Bereich von 0,5 bis 2,3 cm³/g liegt und besonders bevorzugt Poren aus diesem Porengrößenbereich ein kumulatives Porenvolumen von mindestens 1 cm³/g ausmachen.

Beim erfindungsgemäßen Verfahren wird das Gerüst des Elektrodenmaterials, das beispielsweise aus Aktivkohle besteht, mit Aktivmaterial, dem Additiv-Material aus elektrisch leitfähigen Kohlenstoff-Additivpartikeln und einem Binder, imprägniert. Im Gegensatz zu den aus dem Stand der Technik bekannten Elektroden mit Kohlenstoff-Additivpartikel in Form von elektrisch leitfähigem Leitruß oder Graphit, was lediglich die elektrische Leitfähigkeit des Elektrodenwerkstoffs erhöht, wird beim erfindungsgemäßen Verfahren ein Additiv-Material aus porösem Kohlenstoff eingesetzt, der zusätzlich zur lonenleitung beiträgt. Dadurch wird im Vergleich zu Leitrußen eine Erhöhung der lonenleitfähigkeit bei gleichzeitiger Beibehaltung einer hohen elektrischer Leitfähigkeit erreicht.

Das oben erläuterte, erfindungsgemäße Additiv-Material ist für die Herstellung der Elektrode besonders geeignet. Die erfindungsgemäß hergestellte Elektrode ist Teil einer elektrochemischen Zelle in Sinne der Erfindung, wie beispielsweise eines Akkumulators oder eines Kondensators. Insbesondere dient sie zum Einsatz in einem Doppelschichtkondensator gemäß der Erfindung. Die obigen Erläuterungen zum erfindungsgemäßen Additiv-Material und zum erfindungsgemäßen Doppelschichtkondensator gelten daher auch für das Herstellungsverfahren gemäß der Erfindung.

Als Bindemittel sind beispielsweise Polyvinylidenfluorid (PVDF), ein Copolymer, umfassend Polymereinheiten, Teflon, Polyvinyldifluorid, Polyvinylpyrrolidon (PVP), Carboxymethylcellulose und Styrol-Butadien-Rubber geeignet.

### Definitionen und Messmethoden

Einzelne Parameter, Verfahrensschritte und Begriffe der obigen Beschreibung sowie Messmethoden werden im Folgenden ergänzend definiert. Die Definitionen sind Bestandteil der Beschreibung der Erfindung. Bei einem inhaltlichen Widerspruch zwischen einer der folgenden Definitionen und der übrigen Beschreibung ist das in der Beschreibung Gesagte maßgeblich.

Sofern für einen Parameter eine Messmethode nicht angegeben ist, so ist für diesen Parameter die Standard-Messmethode anzuwenden und insbesondere diejenige Messmethode, die in der entsprechenden ISO-Vorschrift niedergelegt ist, deren Veröffentlichungsdatum dem der vorliegenden Anmeldung am nächst liegt. Sollten Messbedingungen nicht angegeben sein, so gelten als StandardBedingungen (SATP-Bedingungen) für die Temperatur 298,15 K (25 °C, 77 °F) und für den absoluten Druck 100 kPa (14,504 psi, 0.986 atm).

### Messung der elektrischen Leitfähigkeit der Additivpartikel

Die Messprobe der Additivpartikel wird durch uniaxiales mechanisches Pressen mit einem Pressdruck von 75 kg/cm² verdichtet. An die verdichtete Messprobe wird mittels Elektroden mit vergoldeten Oberflächen ein elektrischer Strom angelegt und der Spannungsabfall gemessen. Aus dem Messwert werden der elektrische Widerstand und damit die Leitfähigkeit in S/cm berechnet. Bei einem so ermittelten Messwert von mehr als 1 S/cm wird das Material der Messprobe als "elektrisch leitfähig" bewertet.

### Messung von Porosität, Porengröße, Porenvolumen und spezifischer Oberfläche (BET-SSA)

Das spezifische Porenvolumen eines porösen Materials bezeichnet das von Hohlräumen belegte, freie Volumen innerhalb des Materials. Das Porenvolumen und die Porosität werden mittels Quecksilberporosimetrie nach ISO15901-1 (2005) ermittelt. Dabei wird Quecksilber unter Einwirkung eines äußeren Drucks in die Poren des porösen Materials gegen die entgegenwirkenden Oberflächenspannungskräfte gepresst. Die dazu benötigte Kraft ist umgekehrt proportional zur Porengröße und daher kann neben dem kumulativen Porengesamtvolumen auch die Porengrößenverteilung der Probe ermittelt werden.

Als Porosimeter werden "ThermoFisher Scientific" PASCAL 140" (niedriger Druck bis 4 bar) und PASCAL 440 (Hochdruck bis 4000 bar) eingesetzt, jeweils kalibriert mittels porösen Glaskugeln mit einem Porendurchmesser von 75 nm (bezogen von: Universität Leipzig, Fakultät für Chemie und Mineralogie, Institut für Technische Chemie). Anhand der "Washburn-Methode" wird die Quecksilber-Dichte für die tatsächliche Temperatur korrigiert. Für die Oberflächenspannung werden 0,484 N/m und für den Kontaktwinkel 141,1° angesetzt. Die Probengröße wird zwischen ca. 30 und 40 mg gewählt. Vor Beginn einer Messung wird die Messprobe bei 120° C für 24 Stunden beheizt. Das Evakuieren der Messprobe auf einen absoluten Druck von 0,01 kPa erfolgt automatisch durch das Gerät.

Die Quecksilberporosimetrie erfasst nur Porengrößen oberhalb von 2 nm (Mesoporen und Makroporen). Der Beitrag von Mikroporen (mit Porengrößen von weniger als 2 nm) zur Porosität und zur spezifischen Oberfläche wurde anhand der V-t-Methode mittels Stickstoffabsorption ermittelt, wobei eine Probe bei unterschiedlichen Drücken und 77 K gehalten wird. Diese Methode gleicht der BET-Methode, wobei der Druckbereich zu höheren Drücken ausgedehnt ist, so dass auch Oberflächen des nicht mikroporösen Teils des Materials erfasst werden. Sie wird im Folgenden anhand der Oberflächenmesstechnik noch näher erläutert.

Die spezifische Oberfläche wird aufgrund einer Sorptionsmessung nach der Methode von Brunauer, Emmet und Teller (BET-Methode) anhand DIN ISO 9277:1995 durchgeführt. Das Messgerät ist "NOVA-3000 (von Quantachrome), das nach der SMART-Methode (Sorption mit Adaptive Rate Dosierung) arbeitet.

Als Referenzmaterialien werden Aluminiumoxid SARM-13 und SARM-214 von Quantachrome verwendet. Der Sättigungsdampfdruck von Stickstoff (N2 4.0) wird bestimmt und die Messprobe bei 200 °C für 1 Stunde unter Vakuum getrocknet. Nach dem Abkühlen wird das Gewicht der Messprobe ermittelt und anschließend entgast und dabei bis zu einem Absolutdruck von 200 mbar evakuiert. In demjenigen Druckbereich, in dem sich Monoschichten und Mehrfachschichten absorbierter Moleküle bilden, wird die spezifische Oberfläche (BET-SSA) aus der Multischicht-Adsorptionsisotherme (BET-Isotherme) nach Brunauer, Emmett und Teller bestimmt. Für meso- und makroporöse Materialien dienen Adsorptionswerte mit einem Relativdruck von weniger als 0,1.

Die Größenverteilung von Mesoporen wird aus der Desorptions-Isotherme anhand des BJH-Porengrößenmodells nach ISO15901-2 bei Relativdrücken oberhalb von 0,35 abgeleitet. Die empirische t-Plot-Methode nach ISO15901-3 bei einem Relativdruck von mehr als 0,1 dient zur Ermittlung von Porenoberfläche und Porenvolumen, wobei zwischen Oberflächenbeiträgen von Mikroporen und der übrigen Porosität (Mesoporen, Makroporen und Beiträgen der Außenfläche) unterschieden werden kann. Als Referenzmaterialien werden die Standards SARM 2001 und 2004 SARM von Quantachrome verwendet.

Für die Berechnung wird die Probenmasse nach ihrer Entgasung verwendet. Es werden 5 Messungen ausgewertet und der Mittelwert als spezifische Fläche in m²/g angegeben. Vorab wird das Totvolumen jeder Messprobe aufgrund einer Beladung mit Heliumgas (He 4.6, Luftfeuchtigkeit 30 ppmv) bestimmt. Die Glas-Küvetten werden auf 77 °K flüssigem Stickstoff abgekühlt. Der Berechnung liegt als Adsorptiv Stickstoff N₂ 4.0 mit einer molekularen Querschnittsfläche von 0,162 nm² bei 77 °K zugrunde.

### Partikelarößenverteilung

Die Partikelgröße und Partikelgrößenverteilung wird mittels Laser-Beugung an einer dispergierten Probe gemäß ISO 13320 bestimmt. Als Messgerät wird ein Mastersizer 3000 der Firma Malvern verwendet, der mit einem He-Ne-Laser, einer blauen LED und einer Nass-Dispergiereinheit für Messungen bei Umgebungstemperatur (23 °C) ausgestattet ist. Die Nass-Dispergiereinheit wird dabei auf eine Ultraschall-Leistung von 80 % eingestellt, und als Dispersionsmittel dient Wasser. Die D50-Werte der Partikelgrößenverteilung werden anhand der Geräte-Software 21 CFR mit einem Formfaktor von 1 bestimmt. Der D50-Wert kennzeichnet dabei diejenige Partikelgröße, die von 50 % des kumulativen Partikelvolumens nicht erreicht wird (Median-Wert der Partikelgröße).

Partikelgrößen von mehr als 315 µm und entsprechende Größenverteilungen wurden durch Siebanalyse unter Einsatz einer Siebeinrichtung "Air Jet RHEWUM LPS 200 MC" (RHEWUM GmbH) ermittelt.

### Ausführungsbeispiel

Nachfolgend wird die Erfindung anhand eines Ausführungsbeispiels und einer Zeichnung näher erläutert. Im Einzelnen zeigt
- **Figur 1**: eine Zelle eines Doppelschichtkondensators mit Anode, Kathode und Separator in schematischer Darstellung,
- **Figur 2**: eine rasterelektronenmikroskopische Aufnahme eines Elektrodenwerkstoffs ohne Additiv-Zusatz,
- **Figur 3**: eine rasterelektronenmikroskopische Aufnahme eines Elektrodenwerkstoffs mit Additiv-Zusatz,
- **Figur 4**: zyklische Voltammogramme einer herkömmlichen Elektrode mit Leitruß als Additiv im Vergleich mit einer erfindungsgemäßen Elektrode,
- **Figur 5**: einen vergrößerten Ausschnitt aus dem Voltammogramm von Figur 4,
- **Figur 6**: ein Ergebnis einer Vergleichsmessung der Ratenstabilität, und
- **Figur 7**: ein Ergebnis einer Vergleichsmessung bei der Materialausnutzung.

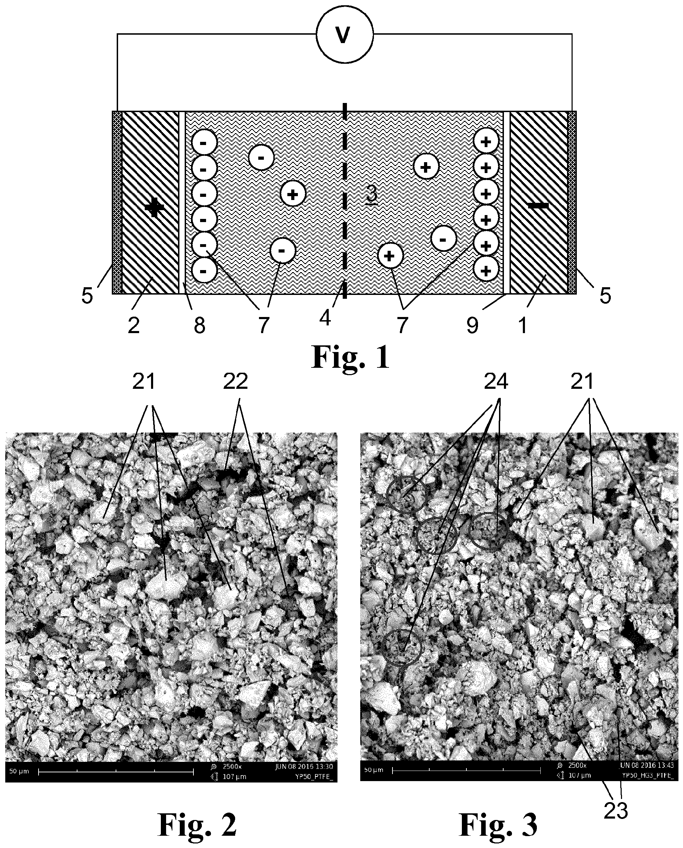

**Figur 1** zeigt schematisch den prinzipiellen Aufbau einer Zelle eines Doppelschichtkondensators. In der Regel sind mehrere derartige Zellen elektrisch in Reihe geschaltet, beispielsweise in einer gestapelten oder gewickelten Anordnung.

Die positiv geladene Elektrode 1 (Kathode) und die negativ geladene Elektrode 2 (Anode) tauchen in einen Elektrolyten 3 ein, dessen Moleküle als Trägermedium für ein Aktivmaterial dienen. Zwischen den Elektroden 1; 2 ist ein Separator 4 angeordnet, der durchlässig ist für die Elektrolyt-Moleküle. An den nach außen weisenden Elektroden-Oberflächen sind elektrische Anschlusskontakte 5 befestigt, über die eine elektrisch leitende Verbindung zu einem Verbraucher 6 erfolgt.

Beim Laden des Doppelschichtkondensators diffundieren die elektrisch geladenen Ionen 7 im Elektrolyt 3 zu der Elektrode der jeweils anderen Polarität und sammeln sich in den Poren der Aktivkohle-Struktur. Auf dieses Weise entstehen an den Elektroden 1, 2 unterschiedlich geladene Schichten 8; 9, die durch Zusammenschaltung in Serie mit Hilfe des elektrolytgetränkten Separators 4 den elektrochemischen Doppelschichtkondensator bilden. Beim Entladevorgang kehrt sich der lonentransport um und die in den Poren der Aktivkohle der Elektroden 1, 2 gespeicherten Ionen wandern unter Abbau der geladenen Schichten 8; 9 in den Elektrolyten 3.

Im Ausführungsbeispiel ist der Elektrolyt eine 1M Tetraethylammoniumtetrafluoroborat (TEABF4) in Acetonitril-Lösung. Der Separator 6 ist ein elektrisch nicht leitendendes, ionendurchlässiges Glasfaservlies der Fa. Whatman, Typ GF/A.

Die Elektroden 1, 2 bestehen im Wesentlichen aus einer Aktivkohle mit vorwiegend Mikroporen (Typ YP-50F von Kuraray Chemicals Co., Japan) mit einem mittleren Partikeldurchmesser im Bereich von 20 bis 40 µm, die das Aktivmaterial im Sinne der Anmeldung darstellen. Der Binder ist Polytetrafluorethylen (PTFE)

Das partikelförmige Additiv-Material wird den Aktivkohle-Teilchen trocken beigemischt. Es handelt sich dabei um Kohlenstoff-Partikel, die unter der Bezeichnung "Porocarb"® von der Firma Heraeus Deutschland GmbH & Co. KG angeboten werden. Diese Kohlenstoffpartikel haben eine sphärische Morphologie und einen mittleren Durchmesser von weniger als 20 µm. Sie zeichnen sich durch eine offene Porosität aus, bei der Meso- und Makroporen über dreidimensionales Netzwerk von Kanälen miteinander verbunden sind. Das dreidimensionale Netzwerk ermöglicht eine besonders schnelle Durchdringung und Diffusion von Ionen für den Ladungstransport. Die Porengrößen im Mesoporen- und Makroporenbereich von etwa 2 nm bis 10 µm machen mehr als 80 % des Volumens der Kohlenstoffpartikel aus. Eine Messung der spezifischen inneren Oberfläche nach der BET-Methode ergibt Messwerte im Bereich von 10 bis 60 m²/g. Das auf Mikroporen beruhende Porenvolumen ist vernachlässigbar klein.

In Vergleichsversuchen werden anstelle der meso- und makroporösen Kohlenstoffpartikel kommerziell erhältliche Graphitpartikel verwendet. Gründe dafür, das erfindungsgemäße Additiv-Material gegenüber Graphit (und nicht gegenüber Leitruß) als Additiv-Material zu vergleichen, liegen darin, dass Graphit (wie Leitruß) eine sehr gute elektrische Leitfähigkeit hat, aber zusätzlich in ähnlicher Partikelgröße wie das Porocarb®-Material erhältlich ist, so dass mit dem Graphit-Additiv ähnliche Elektroden-Werkstoffdichten eingestellt werden können, wie mit dem Porocarb-Material. Der Zusatz von Leitruß führt meist zu verringerten Elektrodendichten, was die Vergleichbarkeit erschwert; eine geringere Dichte führt oft auch zu besserem Ionentransport, bei geringerer Energiedichte des Gesamtsystems.

Die REM-Aufnahme von **Figur 2** zeigt den Elektrodenwerkstoff ohne ein Additiv-material. Es sind Aktivkohleteilchen 21 und Zwischenräume 22 erkennbar.

Die REM-Aufnahme von **Figur 3** zeigt den Elektrodenwerkstoff mit dem Additiv-material in Form der Porocarb®-Kohlenstoffpartikel 23. Wegen ihrer vergleichsweise geringen Partikelgröße von weniger als 20 µm sind die Additivmaterialteilchen 23 in den Lage, die zwischen den Aktivkohleteilchen 21 ursprünglich vorhandenen Zwischenräume 22 mehr oder weniger vollständig auszufüllen. Das Auffüllen der Leerräume ist beispielsweise bei den durch Umrandung hervorgehoben Bereichen 24 besonders gut zu erkennen.

Von den Porocarb-Kohlenstoffpartikeln wurden verschiedene Varianten als Additivmaterial eingesetzt, die sich in Partikelgröße, BET-Oberfläche und Porosität (Gesamt-Porosität, mittlere Porenweite und Porenvolumen der Poren mit Porenweiten zwischen 10 bis 1000 nm) unterscheiden. In Vorversuchen wurden aus den Proben Mischungen mit Aktivmaterial erzeugt und deren Eigenschaften hinsichtlich Dichte, Porosität und elektrischer Leitfähigkeit ermittelt. Die Ausgangsmaterialien und die Messergebnisse sind in **Tabelle 1** im Vergleich mit Graphit (Probe D) zusammengefasst, wobei die Eignung des jeweiligen Probenmaterials in der letzten Spalte der Tabelle als qualitatives Maß "M" angegeben ist.

**Tabelle 1**

| **Additiv Probe** | **Partikel-Durchm. [µm]** | **Gesamt-Porosität [%]** | **Mittlere Porenweite [nm]** | **Porenvolumen (10-1000nm) [cm³/g]** | **BET-Oberfläche [m²**/**g]** | **M** |
|---|---|---|---|---|---|---|
| **A** | 8 | 82 | 450 | 1,2 | 31 | ++ |
| **B** | 3 | 80 | 450 | 1,6 | 45 | ++ |
| **C** | 15 | 85 | 160 | 2,1 | 150 | + |
| **D** | 6 | 20 | 100 | 0,2 | 3 | -- |
| **E** | 1 | 60 | 250 | 1 | 60 | 0 |
| **F** | 21 | 60 | 120 | 0,8 | 80 | -- |
| G | 20 | 85 | 150 | 2,0 | 150 | 0 |

| | | | | | | |
|---|---|---|---|---|---|---|
| Die Symbolik der qualitativen Bewertung in Spalte "M" bedeutet dabei: "++": sehr gut, "+": gut, "0": akzeptabel, "-": schlecht und "--": sehr schlecht. | | | | | | |

Die Additiv-Proben D und F haben sich dabei als ungünstig erwiesen. Bei Probe D (Graphit als Additiv-Material) geht der geringe Partikel-Durchmesser mit einer geringen Gesamt-Porosität mit einem geringen Porenanteil an Meso- und Makroporen einher, so dass keine durchgängige, offene Porenstruktur vorliegt. Bei Probe F führte der große Partikel-Durchmesser zu einer ungenügenden Einpassung in die Leerräume zwischen den Aktivmaterial-Partikeln und einer geringen Dichte des Elektrodenmaterials insgesamt. Die Proben E beziehungsweise G erwiesen sich in dieser Hinsicht als gerade noch akzeptabel. Die anderen Proben zeigten gute Qualität, wobei die Kohlenstoff-Variante von Probe A in den Vorversuchen die erfolgversprechendsten Eigenschaften zeigte.

Um die Grenzen der Einsetzbarkeit zu untersuchen, wurden mit Additiv-Probe A verschiedene Mischungsverhältnisse von Aktivmaterial und Additivmaterial hergestellt und in Bezug auf Kapazität und Ratenstabilität untersucht, und die Ergebnisse mit einem kommerziell erhältlichen Kohlenstoffadditiv (Graphit) verglichen. Die Messergebnisse sind in **Tabelle 2** zusammengefasst:

**Tabelle 2**

| **Beispiel** | **Additiv-material** | **Primärpartikel-Durchmesser des Aktivmaterials [µm]** | **Additiv-Anteil am Elektrodenwerkstoff [Gew.-%]** | **Kapazität [mAh/g _{Aktivmate-rial}]** | **Ratenstabilität [%]** | **Elektrodenschichtdicke [µm]** |
|---|---|---|---|---|---|---|
| **0** | - | 30 | 0 | 20,6 | 38 | 500 |
| **1** | Probe A | 30 | 15 | 16,3 | 29 | 500 |
| **2** | Probe A | 30 | 10 | 17,4 | 46,5 | 500 |
| **3** | Probe A | 30 | 7,5 | 18,5 | 44,2 | 500 |
| **4** | Probe A | 30 | 5 | 22 | 55,8 | 500 |
| **5** | Probe A | 30 | 2,5 | 18,8 | 48 | 500 |
| **6** | Probe B | 30 | 5 | 20,8 | 52 | 500 |
| **7** | Leitruß | 30 | 5 | 18,7 | 51 | 500 |
| **8** | Graphit | 30 | 5 | 18,7 | 27 | 500 |

### Herstellung von Elektroden

Methode 1: Pulver aus dem Additiv- und Aktivmaterial werden zunächst im jeweiligen Verhältnis trocken vorgemischt. Danach werden sie in Ethanol/Isopropanol zu einem Schlicker aufgerührt und der Binder wird zugegeben. Der Binder ist eine wässrige Suspension mit 60 Gew.-% PTFE. Der Schlicker bindet unter kontinuierlichem Rühren ab. Die Elektrodenschicht wird dann im feuchten Zustand durch Ausrollen auf Zieldicke gebracht und mindestens 12h getrocknet.

Bei dieser Methode wird eine freistehende Elektrodenschicht ohne Stromableiter erhalten. Sie ist daher keinen Spannungen aufgrund der Anhaftung am Stromableiter ausgesetzt, so dass Elektrodenschichten von mehr als 150 µm eingestellt werden können.

Vergleichsmethode 2 (Nassbeschichtung): Als Binder wird hier ein Gemisch aus N-Methyl Pyrrolydon und PVDF eingesetzt und ein vergleichsweise dünnflüssiger Schlicker erhalten. Dieser wird mittels der "Doctor Blade-Technik" direkt auf einen Stromableiter aufgerakelt. Bei Nassbeschichtungsprozessen werden im Labormaßstab Trockenschichtdicken von maximal 150µm (einseitig) erreicht.

Die anhand obiger Methode 1 erzeugten Elektrodenschichten werden in definierter Form ausgestanzt. Zwei identische Kohlenstoff-Elektrodenschichten werden in einer elektrochemischen Knopfzelle angeordnet und dazwischen wird eine Separator-Folie eingelegt. Die freistehenden Elektrodenschichten erhalten dabei noch einen Kohlenstoff beschichteten Stromableiter zur Kontaktierung nach außen. Das "Elektrodensandwich" ist wie folgt: Stromableiter | Elektrode | Separator | Elektrode | Stromableiter. Die elektrischen Kontakte nach außen erfolgen über Knopfzellaußenseiten. Die Zelle wird in einer Handschuhbox aufgebaut und mit Elektrolyt (1M Tetraethylammonium tetrafluoroborat in Acetonitril) befüllt bevor sie luftdicht verschlossen wird, um Kontamination mit Sauerstoff und Waser zu vermeiden. Danach kann das elektrochemische Verhalten der Knopfzelle gemessen werden.

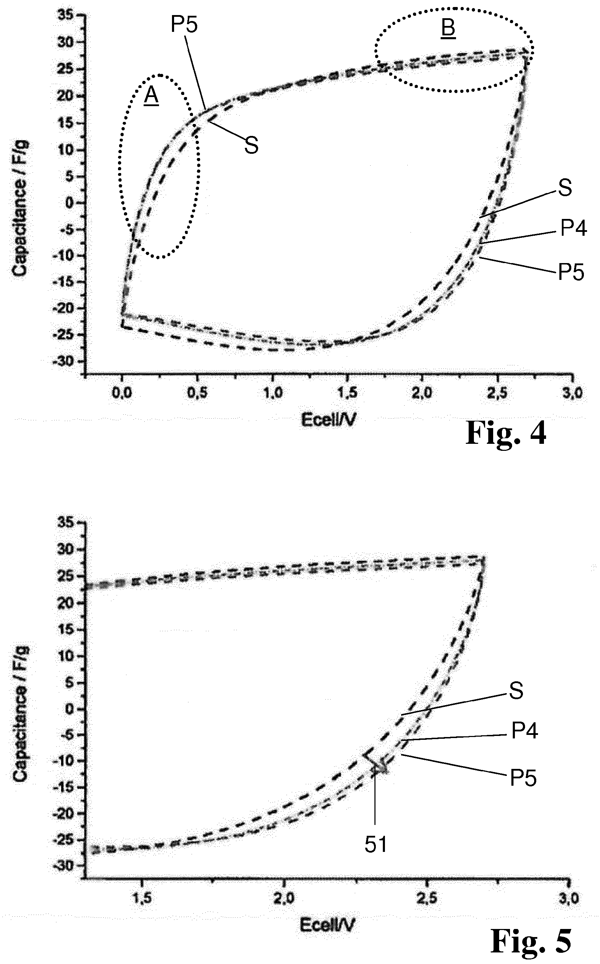

**Figur 4** zeigt das Ergebnis zyklo-voltammetrischer Messungen. Dabei wird an die Knopfzelle eine ansteigende und anschließend eine abfallende Spannung mit einer potentiellen Abtastrate Rampe von 50 mV/s angelegt. Die Stromstärke zum Laden und Entladen der Elektroden wird aufgezeichnet. Aus der gemessenen Stromstärke kann die spezifische Kapazität durch Division mit der Lade-/Entladerampe und der Elektrodenmasse erhalten werden.

Bei den Voltammogrammen für drei verschiedene Messproben von Figur 4 ist auf der Ordinate die so ermittelte spezifische Kapazität gegen die angelegte Spannung (in V) aufgetragen. Das mit "S" bezeichnete Zyklovoltammogramm ist Beispiel 0 von Tabelle 2 zuzuordnen, bei der die Kohlenstoff-Elektrode kein Additiv enthält. Das mit "P5" bezeichnete Zyklovoltammogramm ist Beispiel 4 von Tabelle 2 zuzuordnen, bei der die Kohlenstoff-Elektrode den porösen Kohlenstoff "Porocarb" als Additiv enthält, und das und das mit "P4" bezeichnete Zyklovoltammogramm dem Beispiel 6 von Tabelle 2.

Die Voltammogramme sind jeweils im Spannungsbereich zwischen 0,0 und 2,7 V (Umkehrpotential) angelegter Spannung an der Zelle mit einer Abtastrate von 50 mV/s gemessen.

Die Kapazitäts-Spannungs-Kurven zeigen charakteristische Bereiche A und B, die das elektrochemische Verhalten der Elektroden widerspiegeln. Der Stromanstieg im Bereich A ist auf die Geschwindigkeit in der die Zelle geladen werden kann zurückzuführen. Je steiler dieser Bereich ist umso schneller das Umladen der Zelle. Das Flächenintegral über den gesamten Bereich ist ein qualitatives Maß für die verfügbare aktive Oberfläche. Im Bereich B betrachtet man das System im kontinuierlichen Ladeprozess. Man kann hier Rückschlüsse auf die tatsächliche Kapazität abseits der Umladeprozesse gewinnen. Je größer die Kapazität in diesem Bereich umso größer die Gesamtkapazität des Systems.

Im vergrößerten Ausschnitt dieses Voltammogramms von **Figur 5** deutet der Richtungspfeil 51 den Energiegewinn der erfindungsgemäßen Zelle (Kurve P5) gegenüber der Zelle ohne Elektroden-Additiv (Kurve S) an. Diese Wirkung ist auf die höhere lonenmobilität zurückzuführen, die sich beim erfindungsgemäßen Elektroden-Additiv einstellt.

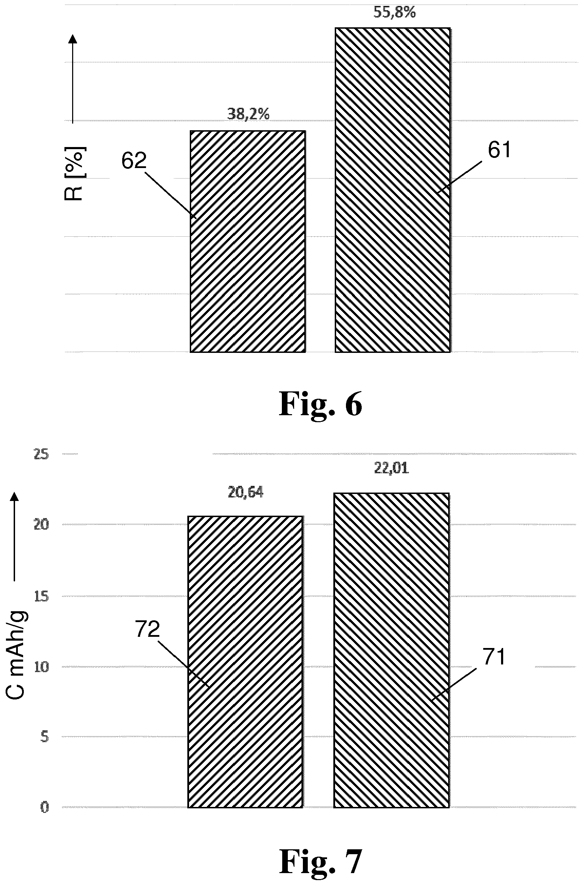

Diese Wirkung der meso- und makroporösen Kohlenstoffpartikel als Elektroden-additiv unterstreichen auch die Blockdiagramme von **Figur 6****,** die die sogenannte Ratenstabilität für einen Doppelschichtkondensator gemäß der Erfindung (Beispiel 4 von Tabelle 2) im Vergleich zu einem herkömmlichen Doppelschichtkondensator ohne Elektroden-Additiv (Beispiel 0 von Tabelle 2) zeigen. Als Maß für die Ratenstabilität R (in % )wird hier das Verhältnis der Kapazitäten einer Zelle beim schnellen Entladen in 10 Sekunden (360C) zu einem langsamen Entladen in 10 Minuten (6C) angenommen. Je größer dieser Verhältniswert ist, umso schneller erfolgt die Umladung und umso höher ist die lonenmobilität innerhalb der Zelle. Aus Figur 6 ist ersichtlich, dass beim schnellen Entladen (360C) der erfindungsgemäßen Zelle 61 immerhin noch etwa 56 % der Kapazität beim langsamen Entladen (6C) erreicht werden. Bei der Vergleichsprobe 62 ergibt sich hingegen nur eine Ratenstabilität R von etwa 38 %.

Das Blockdiagramm von **Figur 7** veranschaulicht die oben erläuterte, verbesserte Materialausnutzung durch die Anbindung des Aktivmaterials bei Einsatz des erfindungsgemäßen Additivs aus Porocarb ®-Material. Die Blockhöhe kennzeichnet die Kapazität C der Knopfzelle (in mAh pro g an Aktivmaterial). Demnach wird bei der Vergleichs-Messzelle 72 ohne Additiv ein Kapazitäts-Wert C von 20,06 mAh/g gemessen, und bei der erfindungsgemäßen Zelle 71 mit einem Additiv-MaterialAnteil von 5 Gew.-% (Beispiel 4 von Tabelle 2) trotz des entsprechend verringerten Anteils an Aktivmaterial ein Kapazitäts-Wert C von 22,01 mAh/g.

## Patentansprüche

1. Additiv-Material für eine Elektrode (1; 2) einer elektrochemischen Zelle, das elektrisch leitfähige Additivpartikel (23) aus Kohlenstoff enthält, **dadurch gekennzeichnet, dass** die Kohlenstoff-Additivpartikel (23) einen mittleren Partikeldurchmesser im Bereich von 1 bis 20 µm aufweisen und Mesoporen und Makroporen enthalten, die eine dreidimensional durchgängige Porenstruktur bilden, wobei Poren mit einem Porendurchmesser von 10 bis 1000 nm ein kumulatives Porenvolumen von mehr als 0,2 cm³/g ausmachen.

2. Additiv-Material nach Anspruch 1, **dadurch gekennzeichnet, dass** die Kohlenstoff-Additivpartikel (23) eine spezifische BET-Oberfläche im Bereich von 10 bis 600 m²/g, und bevorzugt im Bereich von 10 bis 50 m²/g, im Bereich von 100 bis 200 m²/g, im Bereich von 60 bis 150 m²/g oder im Bereich von 400 bis 600 m²/g aufweisen.

3. Additiv-Material nach Anspruch 1 oder 2, **dadurch gekennzeichnet, dass** die Kohlenstoff-Additivpartikel (23) eine Mikroporosität von weniger als 20 % aufweisen - bezogen auf ein Porenvolumen mit Porengrößen bis maximal 1000 nm.

4. Additiv-Material nach einem der vorhergehenden Ansprüche, **dadurch gekennzeichnet, dass** die Kohlenstoff-Additivpartikel (23) einen mittleren Partikeldurchmesser von weniger als 15 µm, vorzugsweise weniger als 10 µm und besonders bevorzugt von weniger als 5 µm aufweisen.

5. Additiv-Material nach einem der vorhergehenden Ansprüche, **dadurch gekennzeichnet, dass** die Kohlenstoff-Additivpartikel (23) eine Gesamtporosität im Bereich von 60 bis 85 % aufweisen.

6. Additiv-Material nach einem der vorhergehenden Ansprüche, **dadurch gekennzeichnet, dass** die Porosität der Kohlenstoff-Additivpartikel (23) durch eine mittlere Porenweite im Bereich von 250 bis 700 nm definiert ist.

7. Additiv-Material nach einem der vorhergehenden Ansprüche, **dadurch gekennzeichnet, dass** Poren mit einem Porendurchmesser von 10 bis 1000 nm ein kumulatives Porenvolumen im Bereich von 0,5 bis 2,3 cm³/g und besonders bevorzugt ein kumulatives Porenvolumen von mindestens 1 cm³/g ausmachen.

8. Doppelschichtkondensator, bei dem zwei Elektroden (1; 2) in einem Abstand zueinander angeordnet, mit elektrischen Anschlüssen (5) versehen, von einem Separator (4) getrennt und von einem Elektrolyt (3) benetzt sind, wobei mindestens eine der Elektroden (1; 2) einen mikroporösen Kohlenstoff, ein Aktivmaterial, ein Additiv-Material aus elektrisch leitfähigen Kohlenstoff-Additivpartikeln und einen Binder enthält, **dadurch gekennzeichnet, dass** das Additiv-Material elektrisch leitfähige Partikel (23) aus Kohlenstoff enthält, die einen mittleren Partikeldurchmesser im Bereich von 1 bis 20 µm aufweisen und Mesoporen und Makroporen enthalten, die eine dreidimensional durchgängige Porenstruktur bilden, wobei Poren mit einem Porendurchmesser von 10 bis 1000 nm ein kumulatives Porenvolumen von mehr als 0,2 cm³/g ausmachen.

9. Doppelschichtkondensator nach Anspruch 8, **dadurch gekennzeichnet, dass** das Aktivmaterial aus Primärpartikeln (21) gebildet wird, die einen mittleren Primärpartikel-Durchmesser aufweisen, der mindestens um den Faktor 3 größer ist als der mittlere Partikeldurchmesser der Kohlenstoff-Additivpartikel (23), wobei der mittlere Primärpartikel-Durchmesser der Aktivmaterial-Partikel (21) im Bereich von 20 bis 30 µm und der mittlere Partikeldurchmesser der Kohlenstoff-Additivpartikel (23) im Bereich von 7 bis 10 µm liegen

10. Doppelschichtkondensator nach Anspruch 9, **dadurch gekennzeichnet, dass** die Elektrode Kohlenstoff-Additivpartikel (23) mit einem Anteil im Bereich von 4 bis 7 Gew.-% enthält.

11. Doppelschichtkondensator nach einem der Ansprüche 8 bis 10, **dadurch gekennzeichnet, dass** die Elektrode (1; 2) eine Elektrodenschicht mit einer Dicke von mindestens 100 µm, vorzugsweise mindestens 150 µm hat.

12. Verfahren zur Herstellung einer Elektrode (1; 2) für einen Doppelschichtkondensator, wobei Ausgangssubstanzen für ein Aktivmaterial, ein Additiv-Material und ein Binder zu einer Paste und diese zu einer Schicht aus dem Elektrodenwerkstoff verarbeitet werden, **dadurch gekennzeichnet, dass** als Additiv-Material elektrisch leitfähige Partikel (23) aus Kohlenstoff eingesetzt werden, die einen mittleren Partikeldurchmesser im Bereich von 1 bis 20 µm aufweisen und Mesoporen und Makroporen enthalten, die eine dreidimensional durchgängige Porenstruktur bilden, wobei Poren mit einem Porendurchmesser von 10 bis 1000 nm ein kumulatives Porenvolumen von mehr als 0,2 cm³/g ausmachen.

13. Verwendung des Additiv-Materials nach einem der Ansprüche 1 bis 7 mit einer spezifischen BET-Oberfläche im Bereich von 40 bis 600 m²/g als Additiv einer Elektrodenplatte in einem Schwefel-Blei-Akkumulator.

14. Verwendung des Additiv-Materials nach einem der Ansprüche 1 bis 7 mit einer spezifischen BET-Oberfläche im Bereich von 60 bis 150 m²/g als Additiv einer Elektrode einer Lithium-Ionen- Batterie.

## Claims

1. An additive material for an electrode (1; 2) of an electrochemical cell, containing electrically conductive additive particles (23) composed of carbon, **characterized in that** the carbon additive particles (23) have an average particle diameter in the range of 1 to 20 µm and contain mesopores and macropores, said mesopores and macropores form a three-dimensional pore structure of interconnected pores, wherein for pores with a pore diameter of 10 to 1000 nm the cumulative pore volume is more than 0.2 cm³/g.

2. The additive material according to claim 1, **characterized in that** the carbon additive particles (23) have a specific BET surface area in the range of 10 to 600 m²/g and preferably in the range of 10 to 50 m²/g, in the range of 100 to 200 m²/g, in the range of 60 to 150 m²/g or in the range of 400 to 600 m²/g.

3. The additive material according to claim 1 or 2, **characterized in that** the carbon additive particles (23) have a microporosity of less than 20% - based on a pore volume with pore sizes up to a maximum of 1000 nm.

4. The additive material according to one of the preceding claims, **characterized in that** the carbon additive particles (23) have an average particle diameter of less than 15 µm, preferably less than 10 µm and particularly preferably less than 5 µm.

5. The additive material according to one of the preceding claims, **characterized in that** the carbon additive particles (23) have a total porosity in the range of 60 to 85%.

6. The additive material according to one of the preceding claims, **characterized in that** the porosity of the carbon additive particles (23) is defined by an average pore width in the range of 250 to 700 nm.

7. The additive material according to one of the preceding claims, **characterized in that** pores with a pore diameter of 10 to 1000 nm make up a cumulative pore volume in the range of 0.5 to 2.3 cm³/g and particularly preferably a cumulative pore volume of at least 1 cm³/g.

8. A double-layer capacitor, in which two electrodes (1; 2) are arranged at a distance from each other, provided with electrical connections (5), separated by a separator (4) and wetted by an electrolyte (3), wherein at least one of the electrodes (1; 2) contains a microporous carbon, an active material, an additive material composed of electrically conductive carbon additive particles and a binder, **characterized in that** the additive material contains electrically conductive particles (23) composed of carbon which have an average particle diameter in the range of 1 to 20 µm and contain mesopores and macropores said mesopores and macropores form a three-dimensional pore structure of interconnected pores, wherein for pores with a pore diameter of 10 to 1000 nm the cumulative pore volume is more than 0.2 cm³/g.

9. The double-layer capacitor according to claim 8, **characterized in that** the active material is formed from primary particles (21) having an average primary particle diameter which is larger than the average particle diameter of the carbon additive particles (23) by at least a factor of 3, wherein the average primary particle (21) diameter is no more than 30 µm, wherein
the average primary particle diameter of the active material particles (21) is in the range of 20 to 30 µm and the average particle diameter of the carbon additive particles (23) is in the range of 7 to 10 µm.

10. The double-layer capacitor according to claim 9, **characterized in that** the electrode contains carbon additive particles (23) in a proportion in the range of 4 to 7 wt.%.

11. The double-layer capacitor according to one of claims 8 to 10, **characterized in that** the electrode (1; 2) has an electrode layer with a thickness of at least 100 µm, preferably at least 150 µm.

12. A method of producing an electrode (1; 2) for a double-layer capacitor, wherein starting substances for an active material, an additive material and a binder are processed to form a paste, and said paste is processed to form a layer of the electrode material, **characterized in that** electrically conductive particles (23) of carbon are used as the additive material, which particles have an average particle diameter in the range from 1 to 20 µm and contain mesopores and macropores, said mesopores and macropores form a three-dimensional pore structure of interconnected pores, wherein for pores with a pore diameter of 10 to 1000 nm the cumulative pore volume is more than 0.2 cm³/g.

13. Use of the additive material according to one of claims 1 to 7 with a specific BET surface area in the range of 40 to 600 m²/g as an additive of an electrode plate in a sulfur-lead accumulator.

14. Use of the additive material according to one of claims 1 to 7 with a specific BET surface area in the range of 60 to 150 m²/g as an additive of an electrode of a lithium-ion battery.

## Revendications

1. Matériau additif pour une électrode (1 ; 2) d'une cellule électrochimique, qui contient des particules d'additif (23) électroconductrices en carbone, **caractérisé en ce que** les particules additives en carbone (23) présentent un diamètre de particule moyen dans la plage de 1 à 20 µm et contiennent des mésopores et des macropores, qui forment une structure poreuse continue de manière tridimensionnelle, dans lequel des pores avec un diamètre de pore de 10 à 1000 nm représentent un volume poreux cumulé de plus de 0,2 cm³/g.

2. Matériau additif selon la revendication 1, **caractérisé en ce que** les particules additives en carbone (23) présentent une surface BET spécifique dans la plage de 10 à 600 m²/g, et de manière préférée dans la plage de 10 à 50 m²/g, dans la plage de 100 à 200 m²/g, dans la plage de 60 à 150 m²/g ou dans la plage de 400 à 600 m²/g.

3. Matériau additif selon la revendication 1 ou 2, **caractérisé en ce que** les particules additives en carbone (23) présentent une microporosité inférieure à 20 % - par rapport à un volume poreux avec des tailles de pores jusqu'à 1000 nm au maximum.

4. Matériau additif selon l'une quelconque des revendications précédentes, **caractérisé en ce que** les particules additives en carbone (23) présentent un diamètre de particule moyen inférieur à 15 µm, de préférence inférieur à 10 µm et de manière particulièrement préférée inférieur à 5 µm.

5. Matériau additif selon l'une quelconque des revendications précédentes, **caractérisé en ce que** les particules additives en carbone (23) présentent une porosité globale dans la plage de 60 à 85 %.

6. Matériau additif selon l'une quelconque des revendications précédentes, **caractérisé en ce que** la porosité des particules additives en carbone (23) est définie par une largeur de pore moyenne dans la plage de 250 à 700 nm.

7. Matériau additif selon l'une quelconque des revendications précédentes, **caractérisé en ce que** des pores avec un diamètre de pore de 10 à 1000 nm représentent un volume poreux cumulé dans la plage de 0,5 à 2,3 cm³/g et de manière particulièrement préférée un volume poreux cumulé d'au moins 1 cm³/g.

8. Condensateur à double couche, où deux électrodes (1 ; 2) disposées l'une par rapport à l'autre à une distance, sont pourvues de bornes (5) électriques, sont séparées par un séparateur (4) et sont imprégnées d'un électrolyte (3), dans lequel au moins une des électrodes (1 ; 2) contient un carbone microporeux, un matériau actif, un matériau additif composé de particules additives en carbone électroconductrices et un liant, **caractérisé en ce que** le matériau additif contient des particules (23) électroconductrices en carbone, qui présentent un diamètre de particule moyen dans la plage de 1 à 20 µm et contiennent des mésopores et des macropores, qui forment une structure poreuse continue de manière tridimensionnelle, dans lequel des pores avec un diamètre de pore de 10 à 1000 nm représentent un volume poreux cumulé supérieur à 0,2 cm³/g.

9. Condensateur à double couche selon la revendication 8, **caractérisé en ce que** le matériau actif est formé à partir de particules primaires (21), qui présentent un diamètre de particule primaire moyen, qui est supérieur au moins du facteur 3 au diamètre de particule moyen des particules additives en carbone (23), dans lequel le diamètre de particule primaire moyen des particules de matériau actif (21) se situe dans la plage de 20 à 30 µm et le diamètre de particule moyen des particules additives en carbone (23) se situe dans la plage de 7 à 10 µm.

10. Condensateur à double couche selon la revendication 9, **caractérisé en ce que** l'électrode contient des particules additives en carbone (23) avec une teneur dans la plage de 4 à 7 % en poids.

11. Condensateur à double couche selon l'une quelconque des revendications 8 à 10, **caractérisé en ce que** l'électrode (1 ; 2) a une couche d'électrode avec une épaisseur d'au moins 100 µm, de préférence d'au moins 150 µm.

12. Procédé servant à fabriquer une électrode (1 ; 2) pour un condensateur à double couche, dans lequel des substances de départ pour un matériau actif, un matériau additif et un liant sont transformés en une pâte et celle-ci est transformée en une couche composée du matériau d'électrode, **caractérisé en ce que** sont employées en tant que matériau additif des particules (23) électroconductrices en carbone, qui présentent un diamètre de particule moyen dans la plage de 1 à 20 µm et contiennent des mésopores et des macropores, qui forment une structure poreuse continue de manière tridimensionnelle, dans lequel des pores avec un diamètre de pore de 10 à 1000 nm représentent un volume poreux cumulé supérieur à 0,2 cm³/g.

13. Utilisation du matériau additif selon l'une quelconque des revendications 1 à 7 avec une surface BET spécifique dans la plage de 40 à 600 m²/g en tant qu'additif d'une plaque d'électrode dans un accumulateur soufre/plomb.

14. Utilisation du matériau additif selon l'une quelconque des revendications 1 à 7 avec une surface BET spécifique dans la plage de 60 à 150 m²/g en tant qu'additif d'une électrode d'une batterie lithium-ion.
